(19) Europäisches Patentamt
European Patent Office
Office européen des brevets

(11) EP 3 572 459 A1

(12) EUROPEAN PATENT APPLICATION
published in accordance with Art. 153(4) EPC

(43) Date of publication:
27.11.2019 Bulletin 2019/48

(51) Int Cl.:
C08L 9/00 (2006.01)
C08K 3/04 (2006.01)
B60C 1/00 (2006.01)
C08L 9/06 (2006.01)

(21) Application number: 18753879.8

(22) Date of filing: 06.02.2018

(86) International application number:
PCT/JP2018/003978

(87) International publication number:
WO 2018/150948 (23.08.2018 Gazette 2018/34)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD TN

(30) Priority: 15.02.2017 JP 2017026118

(71) Applicant: Sumitomo Rubber Industries, Ltd.
Kobe-shi, Hyogo 651-0072 (JP)

(72) Inventor: OKABE, Noboru
Kobe-shi
Hyogo 651-0072 (JP)

(74) Representative: Manitz Finsterwald
Patent- und Rechtsanwaltspartnerschaft mbB
Martin-Greif-Strasse 1
80336 München (DE)

(54) **TIRE**

(57) A tire having a tread composed of a rubber composition comprising: a rubber component comprising a butadiene rubber and a styrene-butadiene rubber and carbon black, wherein an X part by mass of a content of the carbon black based on 100 parts by mass of the rubber component and a Y nm of an average particle size of the carbon black satisfy the following equation (1), the styrene-butadiene rubber and the butadiene rubber form a bicontinuous structure, a distribution ratio $\alpha$ of the carbon black in the styrene-butadiene rubber is 1.5 or more and 1.9 or less, and a distribution ratio $\beta$ of the carbon black in the butadiene rubber is 0 or more and 0.6 or less.

Equation (1) $\qquad 0.11 \leq X/Y^2 \leq 0.26$

**Description**

TECHNICAL FIELD

The present invention relates to a tire having a tread composed of a rubber composition for a tread.

BACKGROUND OF THE INVENTION

Recently as a result of a demand for fuel efficiency of a vehicle, development of a tire having decreased rolling resistance and reduced heat generation has been advanced, and excellent fuel efficiency is required in particular for a tread having a high share in the tire components. As a method for improving fuel efficiency of a rubber composition for a tire, it is well-known to replace carbon black having been used as a reinforcing filler with silica, decrease an amount of a reinforcing filler, and use a reinforcing filler having a large particle size. However, in those methods, there is a problem that abrasion resistance is decreased greatly, and if an amount of a reinforcing filler is decreased, wet grip performance is also lowered. Therefore, fuel efficiency, abrasion resistance and wet grip performance are incompatible with one another and it is difficult to make these compatible with one another.

Patent Document 1 says that a rubber composition having good processability and being excellent in fuel efficiency, wet grip performance, breaking resistance and abrasion resistance in good balance can be obtained by allowing two kinds of polymer phases to have a predetermined phase structure.

PRIOR ART DOCUMENT

Patent Document

Patent Document 1: JP 2015-229697 A

SUMMARY OF THE INVENTION

PROBLEM TO BE SOLVED BY THE INVENTION

An object of the present invention is to provide a tire having a tread composed of a rubber composition for a tread having good abrasion resistance.

MEANS TO SOLVE THE PROBLEM

The present invention relates to a tire having a tread composed of a rubber composition comprising:

a rubber component comprising a butadiene rubber (BR) and a styrene-butadiene rubber (SBR) and carbon black (CB), where an X part by mass of a content of the carbon black based on 100 parts by mass of the rubber component and a Y nm of an average particle size of the carbon black satisfy the following equation (1):

$$\text{Equation (1)} \qquad 0.11 \leq X/Y^2 \leq 0.26,$$

the styrene-butadiene rubber and the butadiene rubber form a bicontinuous structure,
a distribution ratio $\alpha$ of the carbon black in the styrene-butadiene rubber is 1.5 or more and 1.9 or less, and
a distribution ratio $\beta$ of the carbon black in the butadiene rubber is 0 or more and 0.6 or less.

It is preferable that the rubber composition further comprises a softening agent, and a content of the softening agent is not more than 25 parts by mass based on 100 parts by mass of the rubber component.

EFFECTS OF THE INVENTION

The tire of the present invention has a tread composed of a rubber composition comprising: a rubber component comprising a butadiene rubber and a styrene-butadiene rubber and carbon black, where an X part by mass of a content of the carbon black based on 100 parts by mass of the rubber component and a Y nm of an average particle size of the carbon black satisfy the following equation (1):

$$\text{Equation (1)} \qquad 0.11 \le X/Y^2 \le 0.26,$$

the styrene-butadiene rubber and the butadiene rubber form a bicontinuous structure, a distribution ratio $\alpha$ of the carbon black in the styrene-butadiene rubber is 1.5 or more and 1.9 or less, and a distribution ratio $\beta$ of the carbon black in the butadiene rubber is 0 or more and 0.6 or less, and the tire is good in abrasion resistance.

EMBODIMENT FOR CARRYING OUT THE INVENTION

The present invention is directed to a tire having a tread composed of a rubber composition comprising a rubber component comprising a butadiene rubber and a styrene-butadiene rubber and carbon black, where an X part by mass of a content of the carbon black based on 100 parts by mass of the rubber component and a Y nm of an average particle size of the carbon black satisfy the following equation (1):

$$\text{Equation (1)} \qquad 0.11 \le X/Y^2 \le 0.26,$$

the styrene-butadiene rubber and the butadiene rubber form a bicontinuous structure, a distribution ratio $\alpha$ of the carbon black in the styrene-butadiene rubber is 1.5 or more and 1.9 or less, and a distribution ratio $\beta$ of the carbon black in the butadiene rubber is 0 or more and 0.6 or less. Here the rubber composition is a rubber composition subjected to crosslinking (vulcanization) using a crosslinking agent such as sulfur. The above-mentioned average particle size Y is a number-average particle size measured with a transmission electron microscope.

Whether or not the bicontinuous structure is formed by the SBR and the BR in the rubber composition can be judged by observing with a transmission electron microscope. Further, when the SBR and the BR are in a state of forming the bicontinuous structure, the following equations (2) and (3) are satisfied.

$$\text{Equation (2)} \quad \text{Standard deviation of area of SBR phase } /$$

$$\text{Average area of SBR phase} \le 1.3$$

$$\text{Equation (3)} \quad \text{Standard deviation of area of BR phase } /$$

$$\text{Average area of BR phase} \le 1.3$$

It is noted that the standard deviations of areas and average areas of the SBR and the BR are values obtained by observing a surface of the rubber composition with a transmission electron microscope, measuring the areas of the SBR phase and the BR phase separated independently within a measuring range of 6 $\mu$m five times by changing the measuring range, and then calculating a number average of each phase from the measuring results.

The distribution ratio $\alpha$ of the carbon black in the SBR can be calculated by the following equation (4).

$$\text{Equation (4)} \quad \alpha = C \ / \ (A{\times}B) \times 100$$

wherein "A" is a ratio (% by mass) of the SBR in the rubber component, "B" is a content (part by mass) of the carbon black based on 100 parts by mass of the rubber component, and "C" is a content (part by mass) of the carbon black distributed in the SBR based on 100 parts by mass of the rubber component. It is noted that the carbon black distributed in the SBR is in a state of being present in the SBR phase, and a whole surface of a particle of the carbon black is covered with the SBR when the surface of the rubber composition is observed with a transmission electron microscope. "A" is a value obtained by measuring the areas of the SBR phase and the BR phase in a measuring range of 6 $\mu$m five times by changing the measuring range, and then calculating a total area of the SBR phase / (a total area of the SBR phase + a total area of the BR phase). The C/B is a value obtained by measuring the area of the carbon black distributed in the SBR and an area of the whole carbon black five times by changing the measuring range, and then calculating a total area of the carbon black distributed in the SBR / a total area of the whole carbon black.

On the other hand, the distribution ratio $\beta$ of the carbon black in the BR can be calculated by the following equation (5).

$$\text{Equation (5)} \quad \beta = F / (D \times E) \times 100$$

wherein "D" is a ratio (% by mass) of the BR in the rubber component, "E" is a content (part by mass) of the carbon black based on 100 parts by mass of the rubber component, and "F" is a content (part by mass) of the carbon black distributed in the BR based on 100 parts by mass of the rubber component. It is noted that the carbon black distributed in the BR is in a state of being present in the BR phase, and a whole surface of a particle of the carbon black is covered with the BR when the surface of the rubber composition is observed with a transmission electron microscope. "D" is a value obtained by measuring the areas of the SBR phase and the BR phase in a measuring range of 6 μm five times by changing the measuring range, and then calculating a total area of the BR phase / (a total area of the SBR phase + a total area of the BR phase). The F/E is a value obtained by measuring the area of the carbon black distributed in the BR and an area of the whole carbon black five times by changing the measuring range, and then calculating a total area of the carbon black distributed in the BR / a total area of the whole carbon black.

A hardness of the SBR differs from a hardness of the BR in the vulcanized rubber composition since vulcanization rates thereof differ from each other due to a difference in a chemical structure thereof. On the contrary, in the rubber composition comprising the carbon black, the content and the average particle size of which satisfy the above-mentioned equation (1), in which the SBR and the BR form a bicontinuous structure, and the distribution ratio α of the carbon black in the SBR and the distribution ratio β of the carbon black in the BR are within the predetermined ranges, respectively, a balance of hardness of each rubber phase is improved. As a result, the rubber composition for a tread having good abrasion resistance can be obtained.

Various BRs such as a high cis-1,4-polybutadiene rubber (high-cis BR), a butadiene rubber comprising 1,2-syndiotactic polybutadiene crystals (SPB-containing BR), and a modified butadiene rubber (modified BR) can be used as the BR.

The high-cis BR is a butadiene rubber in which the content of cis-1,4 bond is not less than 90% by weight. Examples of such high-cis BR include BR1220 manufactured by ZEON CORPORATION, BR130B and BR150B manufactured by Ube Industries, Ltd. and the like. Low-temperature property and abrasion resistance can be improved by compounding a high-cis BR.

An example of the SPB-containing BR is not one in which 1,2-syndiotactic polybutadiene crystals are simply dispersed in the BR, but one in which 1,2-syndiotactic polybutadiene crystals are chemically bonded with the BR and dispersed therein. Examples of such SPB-containing BR include VCR-303, VCR-412 and VCR-617 manufactured by Ube Industries, Ltd. and the like.

Examples of the modified BR include a modified BR obtained by performing polymerization of 1,3-butadiene with a lithium initiator and then adding a tin compound, and further a modified BR having the molecular terminals bonded with a tin-carbon bond (tin-modified BR), a butadiene rubber having an alkoxysilane compound at an active terminal of the butadiene rubber (a modified BR for silica) and the like. Examples of such modified BRs include BR1250H (tin-modified) manufactured by ZEON CORPORATION, S-modified polymer (modified for silica) manufactured by Sumitomo Chemical Industry Company Limited and the like.

A content of the BR in the rubber component is preferably not less than 10% by mass, more preferably not less than 20% by mass, further preferably not less than 30% by mass, particularly preferably not less than 35% by mass from the viewpoint of abrasion resistance. On the other hand, the content of BR is preferably not more than 70% by mass, more preferably not more than 65% by mass, further preferably not more than 60% by mass from the viewpoint of wet grip performance and cut resistance.

The SBR is not limited particularly, and examples thereof include an unmodified solution-polymerized SBR (S-SBR), an unmodified emulsion-polymerized SBR (E-SBR), a modified SBR thereof (modified S-SBR, modified E-SBR) and the like. Examples of the modified SBR include an end-modified and/or main-chain-modified SBR, a modified SBR coupled with a tin or silicon compound or the like (such as a condensate, one having a branch structure, etc.) and the like.

A styrene content of the SBR is preferably not less than 30% by mass, more preferably not less than 35% by mass from the viewpoint of forming the bicontinuous structure using the SBR being incompatible with the BR. On the other hand, the styrene content of the SBR is preferably not more than 60% by mass, more preferably not more than 50% by mass from the viewpoint of abrasion resistance. Herein the styrene content of the SBR is a value calculated by $^1$H-NMR measurement.

A content of the SBR in the rubber component is preferably not less than 30% by mass, more preferably not less than 35% by mass, further preferably not less than 40% by mass from the viewpoint of wet grip performance. On the other hand, the content of the SBR is preferably not more than 90% by mass, more preferably not more than 80% by mass, further preferably not more than 70% by mass, particularly preferably not more than 65% by mass from the viewpoint of abrasion resistance.

A total content of the BR and the SBR in the rubber component is preferably not less than 90% by mass, more preferably not less than 95% by mass, further preferably 100% by mass from the viewpoint of making it easy for the BR and the SBR to form a bicontinuous structure. On the other hand, from the same viewpoint, a blending mass ratio of the BR to the SBR is preferably 35:65 to 65:35, more preferably 40:60 to 60:40.

The rubber component may comprise a rubber component other than the SBR and the BR. Examples of the rubber component other than the SBR and the BR include rubber components which have been hitherto used in rubber industry, for example, isoprene rubbers such as a natural rubber (NR), an isoprene rubber (IR), a modified NR/IR and a denatured NR/IR, butyl-based rubbers, and diene-based rubbers such as a styrene-isoprene-butadiene rubber (SIBR), a chloroprene rubber (CR) and an acrylonitrile-butadiene rubber (NBR) and the like.

The carbon black is not limited particularly as long as requirements for the content and the average particle size mentioned below are satisfied, and examples of carbon black include furnace black, acetylene black, thermal black, channel black, graphite, and the like. Those carbon blacks may be used alone or may be used in combination of two or more thereof. Among these, furnace black is preferred from the viewpoint of good abrasion resistance.

An average particle size of the carbon black is preferably not less than 7 nm, more preferably not less than 10 nm from the viewpoint of dispersing carbon black uniformly in the rubber and securing processability of crude rubber. Further, from the viewpoint of abrasion resistance, the average particle size of the carbon black is preferably not more than 25 nm, more preferably not more than 22 nm, further preferably not more than 20 nm, particularly preferably not more than 17 nm. It is noted that herein the average particle size of the carbon black can be determined by measuring particle sizes of 400 or more primary particles observed in a visual field with a transmission electron microscope and calculating an average thereof.

A content of the carbon black is preferably not less than 50 parts by mass, more preferably not less than 55 parts by mass based on 100 parts by mass of the rubber component. When the content is less than 50 parts by mass, enough reinforcing property tends not to be obtained. Further, the content of the carbon black is preferably not more than 200 parts by mass, more preferably not more than 150 parts by mass, further preferably not more than 100 parts by mass, particularly preferably not more than 60 parts by mass. When the content exceeds 200 parts by mass, there is a tendency that processability is lowered, heat generation occurs easily and abrasion resistance is reduced.

A nitrogen adsorption specific surface area ($N_2SA$) of the carbon black is preferably 70 $m^2/g$ or more, more preferably 90 $m^2/g$ or more from a point that enough reinforcing property and abrasion resistance can be obtained. Further, the $N_2SA$ of the carbon black is preferably 300 $m^2/g$ or less, more preferably 250 $m^2/g$ or less from a point that dispersibility is good and heat is hardly generated. Herein, the $N_2SA$ of the carbon black is a value measured according to JIS K 6217-2 "Carbon black for rubber industry - Fundamental characteristics - Part 2: Determination of specific surface area - Nitrogen adsorption methods - Single-point procedures".

In addition to the above-mentioned rubber components and carbon black, compounding components and additives having been commonly used in tire industry, for example, reinforcing fillers other than the above-mentioned carbon black, coupling agents, zinc oxide, various oils, softening agents, waxes, various antioxidants, stearic acid, vulcanizing agents such as sulfur, various vulcanization accelerators and the like can be optionally compounded in the rubber composition for a tread according to necessity.

The softening agent is not limited particularly as long as it is one having been used commonly in rubber industry, and examples thereof include oils such as mineral oils, for example, aromatic oil, process oil and paraffin oil, resins such as coumarone-indene resin and petroleum resin and the like. Those can be selected optionally.

When the rubber composition comprises the softening agent, the content thereof is preferably not more than 25 parts by mass, more preferably not more than 20 parts by mass, further preferably not more than 15 parts by mass based on 100 parts by mass of the rubber component from the viewpoint of making it easy for the BR and the SBR to form a bicontinuous structure. On the other hand, from the viewpoint of processability, the content is preferably not less than 5 parts by mass, more preferably not less than 10 parts by mass.

When the rubber composition comprises sulfur as the vulcanizing agent, the content thereof is preferably 0.5 part by mass or more based on 100 parts by mass of the rubber component from the viewpoint of securing an enough vulcanization reaction and obtaining good grip performance and abrasion resistance. Further, the content of the vulcanizing agent is preferably 3 parts by mass or less from the viewpoint of inhibiting lowering of grip performance and abrasion resistance due to blooming.

Examples of a vulcanization accelerator include sulfenamide-, thiazole-, thiuram-, thiourea-, guanidine-, dithiocarbamate-, aldehyde amine- or aldehyde ammonia-, imidazoline- and xanthate-based vulcanization accelerators. These vulcanization accelerators may be used alone or may be used in combination of two or more thereof. Among these, from the viewpoint of good vulcanization characteristics and good fuel efficiency as physical property of the rubber after the vulcanization, sulfenamide-based vulcanization accelerators are preferred, and examples thereof include N-tert-butyl-2-benzothiazolylsulfenamide (TBBS), N-cyclohexyl-2-benzothiazolylsulfenamide (CZ), N,N'-dicyclohexyl-2-benzothiazolylsulfenamide (DZ) and the like.

When the rubber composition comprises the vulcanization accelerator, the content thereof is preferably not less than 0.1 part by mass, more preferably not less than 0.5 part by mass based on 100 parts by mass of the rubber component. When the content is less than 0.1 part by mass, the rubber composition may not be vulcanized sufficiently and required rubber characteristics may not be obtained. On the other hand, the content of the vulcanization accelerator is preferably not more than 5 parts by mass, more preferably not more than 3 parts by mass. When the content exceeds 5 parts by mass, it may cause rubber burning.

The rubber composition for a tread can be prepared by a well-known method. The rubber composition can be prepared, for example, by a method of kneading the above-mentioned components with a rubber kneading machine such as an open roll, a Banbury mixer, a closed kneader or the like and then conducting vulcanization, or by other method. For the reason that carbon black is easily distributed in the SBR, it is preferable to prepare a master batch obtained by kneading the SBR and carbon black previously.

A tire having a tread composed of the rubber composition for a tread can be produced by a usual method using the above-mentioned rubber composition. Namely, the tire can be produced by subjecting an unvulcanized rubber composition obtained by kneading the above-mentioned components to extrusion processing to a shape of a tread, and then laminating together with other tire members on a tire building machine and forming by a usual forming method, thus forming an unvulcanized tire, and heating and compressing this unvulcanized tire in a vulcanizer.

EXAMPLE

The present invention will be described based on Examples, but the present invention is not limited thereto only.

A variety of chemicals used in Examples and Comparative Examples will be explained below.

SBR1: Nipol 9548 (E-SBR, styrene content: 37% by mass, vinyl content: 18 mol%) manufactured by ZEON CORPORATION

SBR2: Nipol 1502 (E-SBR, styrene content: 22% by mass, vinyl content: 18 mol%) manufactured by ZEON CORPORATION

BR: UBEPOL BR150B (cis content: 97% by mass, $ML_{1+4}$(100°C): 40, Mw: $4.4 \times 10^5$, Mw/Mn: 3.3) manufactured by Ube Industries, Ltd.

CB 1: DIABLACK I (N220, $N_2SA$: 114 $m^2/g$, average particle size: 18 nm) available from Mitsubishi Chemical Corporation

CB 2: N134 ($N_2SA$: 143 $m^2/g$, average particle size: 23.4 nm) available from Tokai Carbon Co., Ltd.

Wax: SUNNOC N manufactured by OUCHI SHINKO CHEMICAL INDUSTRIAL CO., LTD.

Antioxidant: ANTIGENE 6C (N-(1,3-dimethylbutyl)-N'-phenyl-p-phenylenediamine) manufactured by Sumitomo Chemical Company, Limited

Oil: PROCESS X-140 (aromatic oil) manufactured by JX Nippon Oil & Energy Corporation

Zinc oxide: Zinc Oxide No. 1 manufactured by Mitsui Mining & Smelting Co., Ltd.

Sulfur: Powdered sulfur manufactured by Karuizawa Iou Kabushiki Kaisha

Vulcanization accelerator CZ: Nocceler CZ (N-cyclohexyl-2-benzothiazolylsulfeneamide) manufactured by OUCHI SHINKO CHEMICAL INDUSTRIAL CO., LTD.

Vulcanization accelerator DM: Nocceler DM (di-2-benzothiazolyldisulfide) manufactured by OUCHI SHINKO CHEMICAL INDUSTRIAL CO., LTD.

Examples and Comparative Examples

According to the compounding formulations shown in Table 1, all chemicals, other than sulfur and a vulcanization accelerator, were kneaded using a 1.7 L sealed Banbury mixer for five minutes up to a temperature of 150°C to obtain a kneaded product. Then, sulfur and a vulcanization accelerator were added to the obtained kneaded product, and kneaded using an open roll for 3 minutes at 80°C to obtain an unvulcanized rubber composition. Further the obtained unvulcanized rubber composition was press-vulcanized at 170°C for 12 minutes to obtain each test rubber composition.

Each of test rubber compositions was observed using a transmission electron microscope, and items shown in Table 1 such as a distribution ratio ($\alpha$) of carbon black in SBR, a distribution ratio ($\beta$) of carbon black in BR and values of the above-mentioned equations (1), (2) and (3) were calculated. The results are shown in Table 1. When a bicontinuous structure formed by the SBR and the BR could be confirmed, it was indicated by "Yes", and when the bicontinuous structure could not be confirmed, it was indicated by "No". In Comparative Example 1, since the SBR2 was compatibilized with the BR, a part of the items could not be observed.

The obtained test rubber compositions and test tires were subjected to the following evaluation. The evaluation results are shown in Table 1.

(Wet grip performance index)

A loss tangent (low temperature tan$\delta$) of a vulcanized rubber composition was measured with a viscoelasticity spectrometer VES (manufactured by IWAMOTO Quartz GlassLab Co., Ltd.) under the conditions of a temperature of 0°C, a frequency of 10 Hz and a dynamic strain of 0.1%. The results are indicated with an index, assuming the tanδ of Comparative Example 1 to be 100. The larger the index is, the better the wet grip performance is.

(Fuel efficiency index)

A loss tangent (high temperature tanδ) of each test rubber composition was measured with a viscoelasticity spectrometer VES (manufactured by IWAMOTO Quartz GlassLab Co., Ltd.) under the conditions of a temperature of 30°C, a frequency of 10 Hz, an initial strain of 10% and a dynamic strain of 2%. The results are indicated with an index, assuming the tanδ of Comparative Example 1 to be 100. The smaller the index is, the better the fuel efficiency is.

(Abrasion resistance)

A volume loss of each test rubber composition was measured under the conditions of a load of 50 N, a speed of 20 km/h and a slip angle of 5° using an LAT tester (laboratory abrasion and skid tester). The results are shown by an index, assuming the result of Comparative Example 1 to be 100. The larger the index is, the better the abrasion resistance is.

Table 1

| | Example | | | | | | Comparative Example | | | |
|---|---|---|---|---|---|---|---|---|---|---|
| | 1 | 2 | 3 | 4 | 5 | 6 | 1 | 2 | 3 | 4 |
| Compounding amount (part by mass) | | | | | | | | | | |
| SBR 1 | 43 | 60 | 50 | 45 | 40 | 35 | 30 | 30 | 20 | 70 |
| SBR 2 | - | - | - | - | - | - | 31 | - | - | - |
| BR | 57 | 40 | 50 | 55 | 60 | 65 | 39 | 70 | 80 | 30 |
| CB 1 | 58.5 | 58.5 | 58.5 | 58.5 | 58.5 | 58.5 | 32 | 58.5 | 58.5 | 30 |
| CB 2 | - | - | - | - | - | - | 37 | - | - | - |
| Wax | 1 | 1 | 1 | 1 | 1 | 1 | 1 | 1 | 1 | 1 |
| Antioxidant | 2 | 2 | 2 | 2 | 2 | 2 | 2 | 2 | 2 | 2 |
| Oil | 21 | 21 | 21 | 21 | 21 | 21 | 19 | 21 | 21 | 21 |
| Stearic acid | 2 | 2 | 2 | 2 | 2 | 2 | 2 | 2 | 2 | 2 |
| Zinc oxide | 2 | 2 | 2 | 2 | 2 | 2 | 2 | 2 | 2 | 2 |
| Sulfur | 1.8 | 1.8 | 1.8 | 1.8 | 1.8 | 1.8 | 1.8 | 1.8 | 1.8 | 1.8 |
| Vulcanization accelerator CZ | 1.8 | 1.8 | 1.8 | 1.8 | 1.8 | 1.8 | 1.8 | 1.8 | 1.8 | 1.8 |
| Vulcanization accelerator DM | 0.2 | 0.2 | 0.2 | 0.2 | 0.2 | 0.2 | 0.2 | 0.2 | 0.2 | 0.2 |
| Amount of CB in SBR | 42.6 | 57.1 | 45.9 | 44.1 | 38.9 | 36.3 | - | 33.7 | 23.3 | 29.7 |
| Distribution ratio of CB in SBR ($\alpha$) | 1.69 | 1.63 | 1.57 | 1.68 | 1.66 | 1.77 | - | 1.92 | 1.99 | 1.41 |
| Amount of CB in BR | 15.9 | 1.4 | 12.6 | 14.4 | 19.6 | 22.2 | - | 24.8 | 35.2 | 0.3 |
| Distribution ratio of CB in BR ($\beta$) | 0.48 | 0.06 | 0.43 | 0.45 | 0.56 | 0.58 | - | 0.61 | 0.75 | 0.03 |
| Presence of bicontinuous structure | Yes | Yes | Yes | Yes | Yes | Yes | - | No | No | No |
| Average area of SBR phase ($\mu$m$^2$) | 0.048 | 0.045 | 0.036 | 0.055 | 0.034 | 0.030 | - | 0.070 | 0.021 | 0.063 |
| Average area of BR phase ($\mu$m$^2$) | 0.103 | 0.057 | 0.063 | 0.093 | 0.067 | 0.048 | - | 0.034 | 0.090 | 0.087 |
| Standard deviation of area of SBR phase | 0.018 | 0.017 | 0.013 | 0.019 | 0.010 | 0.010 | - | 0.066 | 0.071 | 0.046 |

(continued)

| | Example | | | | | | Comparative Example | | | |
|---|---|---|---|---|---|---|---|---|---|---|
| | 1 | 2 | 3 | 4 | 5 | 6 | 1 | 2 | 3 | 4 |
| Compounding amount (part by mass) | | | | | | | | | | |
| Standard deviation of area of BR phase | 0.02 | 0.020 | 0.024 | 0.013 | 0.023 | 0.041 | - | 0.047 | 0.017 | 0.169 |
| Equation (2) | 0.38 | 0.38 | 0.36 | 0.35 | 0.29 | 0.33 | - | 0.94 | 3.4 | 0.73 |
| Equation (3) | 0.19 | 0.35 | 0.38 | 0.14 | 0.34 | 0.85 | - | 1.38 | 0.19 | 1.94 |
| Equation (1) | 0.18 | 0.18 | 0.18 | 0.18 | 0.18 | 0.18 | - | 0.18 | 0.18 | 0.09 |
| Evaluation | | | | | | | | | | |
| Index of wet grip performance | 100 | 109 | 104 | 104 | 97 | 96 | 100 | 94 | 86 | 117 |
| Index of fuel efficiency | 86 | 89 | 91 | 88 | 84 | 82 | 100 | 84 | 78 | 96 |
| Index of abrasion resistance | 201 | 195 | 197 | 199 | 197 | 190 | 100 | 145 | 136 | 115 |

From the results shown in Table 1, it is seen that the tire having a tread composed of the rubber composition comprising: a rubber component comprising a butadiene rubber and a styrene-butadiene rubber and carbon black, in which a content of the carbon black and an average particle size of the carbon black satisfy the predetermined relation, the styrene-butadiene rubber and the butadiene rubber form a bicontinuous structure and the carbon black is distributed in the styrene-butadiene rubber, is good in abrasion resistance.

## Claims

1. A tire having a tread composed of a rubber composition comprising:

   a rubber component comprising a butadiene rubber and a styrene-butadiene rubber and carbon black,
   wherein an X part by mass of a content of the carbon black based on 100 parts by mass of the rubber component and a Y nm of an average particle size of the carbon black satisfy the following equation (1):

   $$\text{Equation (1)} \qquad 0.11 \leq X/Y^2 \leq 0.26,$$

   the styrene-butadiene rubber and the butadiene rubber form a bicontinuous structure,
   a distribution ratio $\alpha$ of the carbon black in the styrene-butadiene rubber is 1.5 or more and 1.9 or less, and
   a distribution ratio $\beta$ of the carbon black in the butadiene rubber is 0 or more and 0.6 or less.

2. The tire of claim 1,
   wherein the rubber composition further comprises a softening agent, and
   a content of the softening agent is not more than 25 parts by mass based on 100 parts by mass of the rubber component.

3. The tire of claim 1 or 2, wherein a standard deviation of an area of a styrene-butadiene rubber phase / an average area of a styrene-butadiene rubber phase is 1.3 or less, and a standard deviation of an area of the butadiene rubber phase / an average area of the butadiene rubber phase is 1.3 or less.

4. The tire of any one of claims 1 to 3, wherein an average particle size of the carbon black is from 7 to 22 nm.

**EP 3 572 459 A1**

**INTERNATIONAL SEARCH REPORT**

<table>
<tr><td colspan="2">International application No.</td></tr>
<tr><td colspan="2">PCT/JP2018/003978</td></tr>
</table>

**A. CLASSIFICATION OF SUBJECT MATTER**
Int. Cl. C08L9/00(2006.01)i, B60C1/00(2006.01)i, C08K3/04(2006.01)i, C08L9/06(2006.01)i

According to International Patent Classification (IPC) or to both national classification and IPC

**B. FIELDS SEARCHED**

Minimum documentation searched (classification system followed by classification symbols)
Int. Cl. C08L9/00, B60C1/00, C08K3/04, C08L9/06

Documentation searched other than minimum documentation to the extent that such documents are included in the fields searched
Published examined utility model applications of Japan     1922-1996
Published unexamined utility model applications of Japan   1971-2018
Registered utility model specifications of Japan           1996-2018
Published registered utility model applications of Japan   1994-2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2015-059140 A (SUMITOMO RUBBER INDUSTRIES, LTD.) 30 March 2015, claims, paragraphs [0016], [0064]-[0082] & US 2016/0200901 A1, claims, paragraphs [0016], [0069]-[0130] & WO 2015/040991 A1 & EP 3037468 A1 & CN 105492523 A | 1-4 |
| A | JP 2011-054314 A (THE YOKOHAMA RUBBER CO., LTD.) 17 March 2011, paragraph [0071], (Family: none) | 1-4 |
| A | JP 2017-008141 A (THE YOKOHAMA RUBBER CO., LTD.) 12 January 2017, entire text, (Family: none) | 1-4 |
| A | JP 2013-256585 A (SUMITOMO RUBBER INDUSTRIES, LTD.) 26 December 2013, entire text & US 2013/0331498 A1, full text & CN 103483636 A | 1-4 |

☒ Further documents are listed in the continuation of Box C.     ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>17.04.2018 | Date of mailing of the international search report<br>01.05.2018 |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

9

**INTERNATIONAL SEARCH REPORT**

International application No.

PCT/JP2018/003978

C (Continuation). DOCUMENTS CONSIDERED TO BE RELEVANT

| Category* | Citation of document, with indication, where appropriate, of the relevant passages | Relevant to claim No. |
|---|---|---|
| A | JP 2014-218549 A (THE YOKOHAMA RUBBER CO., LTD.) 20 November 2014, entire text & US 2016/0075864 A1, full text & WO 2014/178431 A1 & DE 112014002243 T & CN 105164195 A & KR 10-2015-0132607 A | 1-4 |
| A | JP 2015-232114 A (SUMITOMO RUBBER INDUSTRIES, LTD.) 24 December 2015, entire text & US 2015/0329696 A1, full text & EP 2944669 A1 & CN 105175814 A | 1-4 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015229697 A